# EUROPEAN PATENT APPLICATION

(11) **EP 4 399 954 A1**
(43) Date of publication of application: **17.07.2024**
(21) Application number: 23151147.8
(22) Date of filing: 11.01.2023
(51) Int. Cl.: A01B 15/08, A01B 3/46

(54) **AGRICULTURAL MACHINE SYSTEM**

(71) Applicant: Kverneland Group Operations Norway AS, 4353 Klepp Stasjon (NO)
(72) Inventor: BRUER, Audun M., 4353 Klepp stasjon (NO); BRYNE, Bjørn, 4353 Klepp stasjon (NO); WERNER, Dag Arne, 4353 Klepp stasjon (NO)
(74) Representative: Bardehle Pagenberg Partnerschaft mbB Patentanwälte Rechtsanwälte

(57) **Abstract**

The present invention relates to an agricultural machine system comprising a plough (1) with at least one plough body (2), which plough body comprises a mould board (20). The board is provided with at least one support strut (30) that is attached on the backside of the mould board (20) at a first attachment point (32) and to another part of the plough (1) at a second attachment point. The system further comprises adjustment means (34) adapted to increase or decrease the distance between the two attachment points (32, 33) and a powered actuating mechanism (35).

## Description

### 1. Field of the Invention

The present invention relates to an improved agricultural machine system comprising an adjustable support strut for the mould board as well as to a method for adjusting such an agricultural machine system.

### 2. Technical background

The mould board of a plough body is typically the largest component of the body and is formed off a leaf-like curved piece of sheet material. Together with the share and the landside, the mould board is typically bolted to the saddle. The mould board is responsible for lifting and turning the furrow slice. In modern ploughs it is common to reinforce the mould board by means of a reinforcing structure, typically in form of an elongated support strut. The strut is attached on one end at the backside of the mould board and with the other end on some part of the plough, like for example the saddle or the plough beam. The arrangement of the strut supports the mould board, when the plough is in use, and it is arranged such that it acts to counter the forces acting on the mould board, when the same is pulled through the soil. In some instances, the support strut has the form of a bar or bolt with threaded ends and is fixed to the mould board and/or the saddle by means of a screw nut. Such an arrangement allows for a certain flexibility when assembling the plough body. Once assembled, the support strut remains in its initially attached condition.

It is also known to mount the mould boards, respectively the whole plough body with the mould board, adjustably on the plough beam. These arrangements allow e.g. to vary the angle or inclination of the plough body relative to the beam and thus the soil, to adapt the body to various working conditions. The overall shape of the mould board and the other components of the plough body are not affected or changed thereby, but merely the orientation thereof.

It is an object of the present invention to provide an improved agricultural machine system, which allows an improved adaption of the plough body to different working conditions, as for example different soil types, moisture conditions, tractor speeds etc. This object is solved by an agricultural machine system in accordance with claim 1 and a method for using such an agricultural machine system in accordance with claim 15.

### 3. Summary of the Invention

The present invention relates to an agricultural machine system comprising a plough with at least one plough body, which plough body comprises a mould board, which is provided with a support strut that is attached on the backside of the mould board at a first attachment point and to another part of the plough at a second attachment point. The mould board is preferably a curved piece of sheet metal or plastic and the frontside (facing the soil) is concave and the backside is accordingly convex. However, the mould board can be provided in various shapes and also other materials and it is often coated with paint and/or antirust treatments etc. The support strut further comprises an adjustment means that is adapted to increase or decrease the distance between the two attachment points and comprises a powered actuating mechanism to effect said increase or decrease. The attachment points are arranged on the plough, such that increasing or decreasing the distance modifies the shape of the mould board, as at least the first attachment point on the mould board will transfer forces into the mould board when the distance of the two attachment points is changed. This is in particular true, when the second attachment point is at a rigid structure, as e.g. the plough beam, and the mould board is likewise fixed immovable with regard to said structure. In such an arrangement, changing the distance between the attachment points is only possible when the mould board is bend accordingly.

The plough body typically comprises additional functional elements, as a share, saddle, landside and is arranged on a supporting beam. The plough can comprise a plurality of plough bodies, whereby preferably each plough body comprises an adjustable mould board. The support strut can be a single piece and can e.g. have the form of an elongated bolt- or bar-like element. Preferably, however, the strut is assembled from several elements as will be explained in more detail further below. In order to serve as a support or reinforcing structure for the mould board, the strut needs to have a first working point on the mould board and another second working point, preferably on a rigid structure of the plough, as for example the plough beam onto which the mould board is mounted. Thereby, forces acting on the working surface of the mould board when ploughing through the soil can be transmitted at least partially through the support strut from the mould board to e.g. the frame of the plough. This kind of reinforcing mechanism is well known in the art and the skilled person knows various arrangements to achieve the desired reinforcing effect on the mould board.

According to the invention, the support strut is further provided with, or comprises, an adjustment means for increasing or decreasing the distance between the two attachment points. By changing the distance between the attachment points, forces will act on the mould board which can be used to influence (adjust) the mechanical behavior of the mould board. It is in particular possible to adjust the physical shape of the mould board and to use this adjustment to tune the shape optimally to different working conditions. Advantageously, this can be achieved by employing an element which is necessary and often present anyhow in a plough, namely the support struts of the mould boards. Thus, it is possible to create a cost-efficient solution which does additionally require only very limited additional space on the plough body. In contrast to prior art adjustment systems, the present invention allows to influence not only the orientation of a given plough body, respectively mould board, but to influence the shape of the mould board itself in a convenient automated manner. This is achieved by providing a powered actuating mechanism that is adapted to adjust said distance and by choosing the attachment points of the support strut accordingly, so that a decrease or increase will affect (modify) the shape of the board, as e.g. the curvature thereof.

Mould boards are commonly curved pieces of sheet metal or plastic with a concave front surface facing the soil and accordingly a convex backside. As the strut is attached to the backside of the board, typically an increase of the distance between the attachment points will lead to an increase in the curvature of the board and a decrease in the distance to a decrease in the curvature, i.e. to a "flattening" of the curved mould board.

Preferably, the support strut is attached on the backside of the mould board at a further, third attachment point. Thus, the support strut is attached to the backside by two attachment points, i.e. two attachment brackets. By means of two attachment points on the backside, the control and variety of the modification of the shape of the mouldboard can be improved. Further, the support of the mouldboard is increased.

As a further preferred embodiment, the first and the third attachments points are offset relative to each other in a direction of the longitudinal extension of the support strut. Thereby, a change in the distance between the second attachment point and the first and third attachment points leads to a particularly effective modification of the shape of the mouldboard.

Generally preferred, the increase and decrease of the distance between the attachment points is achieved by increasing respectively decreasing the overall length of the support strut. To this end the support strut can e.g. be provided with a telescope mechanism, which preferably is realized in form of a hydraulic cylinder or an electric actuator.

Preferably, the agricultural machine system comprises a control device that adjusts the distance between the two attachment points of the strut dynamically, which control device comprises control data that matches said distance with one or more of the following conditions: soil moisture, ploughing depth, ploughing speed or type of soil. As mentioned above, the adjustment of the distance between the attachment points affects the shape of the mould board in the arrangement of the invention. Thereby it is possible to optimize the shape of the mould board to different working conditions. The control device contains data that can e.g. be gathered empirically for certain mould board shapes, that matches a certain distance (and thus shape of the mould board) with the working conditions. In this way the shape can be adjusted when e.g. the ploughing speed is increased, such that the drag of the plough body is reduced. In this way it is possible to save fuel of the pulling machine. Certain soil types are better ploughed with a stronger curvature of the mould board while others might require a more flattened mould board. With the present invention, it is possible to provide these adaptions for example at the start of each ploughing operation. The user can enter the conditions e.g. manually and the control device calculates or chooses the optimal distance between the two attachment points, i.e. ultimately the optimal shape of the mould board, and controls the actuating device accordingly.

Preferably, the system comprises a control device that adjusts the distance between the two attachment points of the strut dynamically, preferably while ploughing, i.e. during an ongoing ploughing operation. Dynamically means in this context, that the distance is not set fixed but can be changed whenever required. That can be e.g. at the start of each ploughing operation, but it can also be done while ploughing is ongoing. In the latter case it is preferred that the system comprises some kind of sensor means to gather information about the current working conditions and to provide the control device with the information. The control device can e.g. be connected with the speedometer of the pulling machine and use the information about the speed while ploughing to automatically adjust the distance based on the current speed by controlling the actuating mechanism accordingly.

In preferred embodiments, the attachment points are arranged, such that increasing or decreasing the distance modifies the curvature of the mould board. As stated above, and readily known by the skilled person, mould boards are responsible for lifting and turning the furrow slice and have therefore typically a curved surface. By choosing suitable attachment points it is possible to influence this curvature. If e.g. both attachment points are arranged on the backside of a curved mould board, an increase of the distance, by e.g. elongating the support strut, which could be provided with a telescope mechanism for this purpose, the curvature of the mould board will increase. The curved shape of modern mould boards is often very complex. Thus, by choosing an asymmetric arrangement of the attachment points, the shape of the mould board can be adapted even further. If one attachment point is e.g. chosen close to an edge of the mould board and the other more in the center of the mould board, the mould board will react differently to an adjustment of the distance than if e.g. both attachment points are arranged in a center region of the board. The skilled person will understand that the present invention can also be employed when both attachment points are provided on the mould board itself. However, it is preferred to provide the second attachment point not on the mould board but on a structure that is immovable with regard to the mould board, as e.g. the plough beam carrying the respective mould board. This has the advantage that a particularly large lever is provided, and it offers a particularly good support for the mould board when the same is in use.

In a preferred embodiment, the adjustment means are adapted to dispose the distal end of the mould board upon increasing or decreasing the distance between the two attachment points by at least 1 cm, more preferred 2 cm, even more preferred 4 cm and most preferred more than 5 cm. The distal end of the mould board is opposite the end of the board where it is attached to e.g. the plough beam. To have a noticeable effect on the ploughing operation, the change in the shape of the mould board should have a certain minimum amount. The larger the effect of a change in distance is to the overall shape of the mould board, the better can it be adapted to different working conditions. A disposition by e.g. 2 cm means, that from a given shape, the adjustment mechanism is provided and arranged such that by increasing or decreasing the distance, the distal end of the board moves by 2 cm.

In preferred embodiments, the actuating mechanism comprises a hydraulic cylinder or an electric motor. The power for operating the mechanism can e.g. be provided by the pulling machine, i.e. the tractor. This has the advantage, that the power sources of the pulling machine can be used, and no additional power supply is necessary. Typically, the pulling machine also has means to supply hydraulic pressure, which could also be used to actuate a hydraulic cylinder. Alternatively, the hydraulic cylinder can be provided with a corresponding electrically driven hydraulic pump or similar.

Preferably, the hydraulic cylinder is arranged in line with the strut and forms a part of the strut and it is further preferably adapted to increase or decrease the overall length of the strut. This arrangement has the advantage, that the hydraulic cylinder itself does basically not need any additional space on the plough, as it is arranged in the same space as the support strut. The piston of the electronic cylinder is thus arranged in line with the strut and can form part of the strut, and / or another part of the strut is fixedly attached to the piston, so by moving the piston inside of the hydraulic cylinder, the strut (or a part of it) is moved back and forth. The base of the hydraulic cylinder can for example be attached to the plough beam and the strut is attached to the piston of the cylinder and extends to the first attachment point on the backside of the mould board. When the piston is moved, the overall length of the strut is increased or decreased thereby. Since all the acting forces in such an arrangement are arranged in one line, it is advantageously possible to transfer the occurring forces directly into the plough beam on the one end and onto the mould board on the other end.

In a preferred embodiment, the mould board is fixed relative to the plough beam and cannot rotate in relation thereto. Such a fixed arrangement helps to achieve the desired modification of the shape of the mould board by increasing or decreasing the distance between the two attachment points. It allows for example, that the second attachment point is arranged on the plough beam or another part of the frame of the plough, so that when the distance is changed, the acting forces lead to a change in the shape of the mould board, in contrast to a mere changing of orientation or angle of the mould board relative to the beam or frame of the plough. In contrast of a hinged mould board that can rotate relative to the plough beam or frame of the plough, this allows a very effective transmitting of force onto the mould board. In other words, it prevents that upon changing the distance of the two attachment points the mould board moves relative to the beam or frame of the plough.

In preferred embodiments, the strut comprises a guide element that is attached to the backside of the mould board and having a guide aperture through which the strut extends. The provision of such a guide element facilitates the transmitting of forces into the mould board and thus reduces the forces necessary for achieving a change in the shape of the mould board. The guide element offers an additional working point for the strut to transfer the forces from the powered actuating mechanism into the board. By choosing a suitable attachment of the guide element at the surface of the mould board, it is further possible to influence the effect of the adjustment means. This offers an additional level of freedom in modifying the shape of the mould board and thus an even better adaption of the shape of the mould board to the working conditions.

Preferably, the guide element is a bracket that extends essentially perpendicular to the strut. The choice of a bracket that extends perpendicular to the strut across the backside of the mould board allows attachment points of the guide element on the mould board that allow for a better adaption of the shape of the mould board, when the adjustment means are operated by the powered actuating mechanism. The form and shape as well as the attachment means for the guide element can further be used to influence the behavior of the mould board when the distance between the attachment points is changed. Thus, also the form and/or attachment of the bracket give an additional degree of freedom for influencing the modification of the shape of the mould board.

In another preferred embodiment, the agricultural machine system further comprises sensors to detect one or more of the following working conditions: soil moisture, ploughing depth, ploughing speed or type of soil. A control device is preferably provided, that adjusts the distance between the two attachment points (and thereby modifies the shape of the mould board) dynamically based on the readings of the sensors. If a sensor for example detects a certain soil moisture, this information can be used by the control device, to modify the shape of the mould board in a way, which is particularly suitable for the detected moisture content. To this end, the control device is preferably provided with data and parameters mapping for example moisture content with suitable values for the adjustment of the distance. The control device can do the adjustments automatically, but it is also possible that the operator is presented with the sensor readings and decides manually about the adjustment of the distance. For example, the control device may have a user interface, by means of which the operator can manually choose between different options provided by the control device for suitable distances based on certain sensor readings. In a particularly advantageous embodiment, the control device does everything automatically. Thus, when for example the sensors measure a certain ploughing speed, the control device adjusts the distance between the two attachment points automatically to suitable values.

Preferably, the agricultural machine system comprises means to retrieve information of one or more of the following: soil moisture, ploughing depth, ploughing speed, ploughing force, nutrients, stubble or type of soil, and a control device that adjusts the distance between the two attachment points of the strut dynamically based on the retrieved information, preferably automatically. The means to retrieve information can e.g. comprises a memory device with stored data about the information or it could be a receiver that is adapted to receive the information from an external database, e.g. by using a telecommunication network. Naturally, the information is specific for the currently ploughed field to allow an efficient dynamic adjustment based on the conditions of the field.

Preferably, the plough has at least two plough bodies, such as for example 3, 5, 7 or 9, and each is provided with an adapted mould board as described herein. Further, a control device is provided, which is arranged to adapt all the adaptable mould boards of the plough individually. In one preferred embodiment, all the mould boards are adapted in the same manner, except for the rearmost mould board of the plough. In this way it is possible to specifically adapt the form of the resulting furrow in the field created by the rearmost mould board, respectively the rearmost plough body. Depending on the type of plough used, it is for example particularly preferred, that the rearmost mould board is adapted such that it matches the tire size of a tractor pulling the plough. This means, that the last furrow created by the rearmost mould board is wider or narrower than the other furrows, so that it ideally matches the tire size of the tractor. Thereby, the driver of the tractor can use this last furrow to easily orient the tractor on the return run, when the next furrows are created. In most applications, it is therefore particularly preferred, that the control device is arranged to adapt the rearmost mould board such that the furrows formed by the rearmost plough body are wider than the furrows formed by the other plough bodies of the plough. This is a particular advantage which is offered by the present invention, as the inventive adjustment means with a powered actuating mechanism cannot only be used to modify the shape of the mould board, but also to modify the shapes individually depending on the ploughing conditions and the desired ploughing results.

The present invention also relates to a method for dynamically adjusting an agricultural machine system, comprising the steps of providing an agricultural machine system as described herein and adjusting the distance between the attachment points of the strut dynamically in accordance with the ploughing conditions. Again, the term "dynamically" in this context means, that the distance between the attachment points, and thereby the shape of the mould board, can be changed before the start of each ploughing operation or it can in a particular preferred form even be done during an ongoing ploughing operation. This is for example in particular advantageous if the operating conditions change while ploughing is in progress (due to for example starting rain, or increase or decrease in the speed of the tractor, etc.).

### 4. Example Embodiments

In the following, the present invention will be described under reference to the enclosed figures. Herein shows
- Figure 1: A prior art plough, which is generally suitable for the implementation of the present invention;
- Figure 2: a schematic illustration of a mould board with a powered adjustment means in accordance with the invention, and
- Figure 3: another embodiment of a mould board.

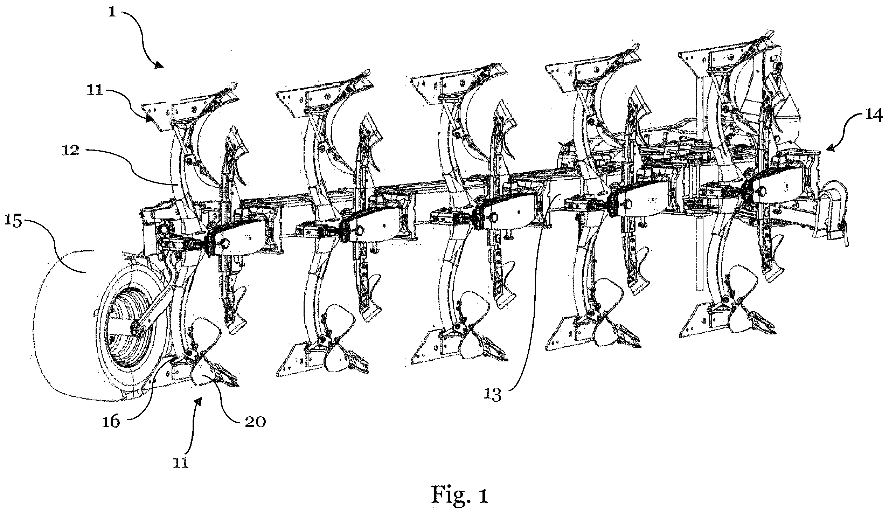

In fig. 1, a plough 1, namely a reversible, multi furrow mould board plough is shown, which has five double plough bodies 11. The plough bodies are fixedly attached to plough beams 12, which in turn extend from a horizontally extending main frame 13. On one end of the main frame 13, attachment means 14 for attaching the plough to a tractor are provided. On the rear end of the main frame 13, a rear wheel 15 is provided, which serves to adjust the ploughing depth of the shown device. The shown plough 1 is state-of-the-art and the skilled person is very familiar with these kind of ploughs, so that it is refrained from giving a detailed description of all the details.

Important for the understanding of the present invention are the mould boards 20 and their attachment to the distal ends of the beams 12. As one can take from fig. 1, the mould boards 20 have a generally leaf-like curved form. The mould boards are often made of sheet metal, but also other materials are possible, as e.g. suitable plastic materials. The backside of the mould board 20 has a convex shape, while the front side, which comes into contact with the soil, has a concave surface. Each mould board 20 is reinforced by a support strut 16 that is fixed with a first attachment point to the backside of the mould boards 20 and with a second attachment point to the respective beam 12 of the plough. When in use, the forces acting onto the mould board 20 can thereby be transferred at least partially into the beam 12, respectively the frame of the plough, so that the mould board 20 is supported against the external forces acting on it from the soil.

The struts 16 visible in fig. 1 are sturdy metal bolts and attached to the mould board by means of a screw and nut fixation. This makes it possible to detach for example the mould board 20 from the support strut 16, if for example the mould board 20 needs to be exchanged. The shown arrangement is completely fixed and does not allow for an adjustment of any part of the plough body.

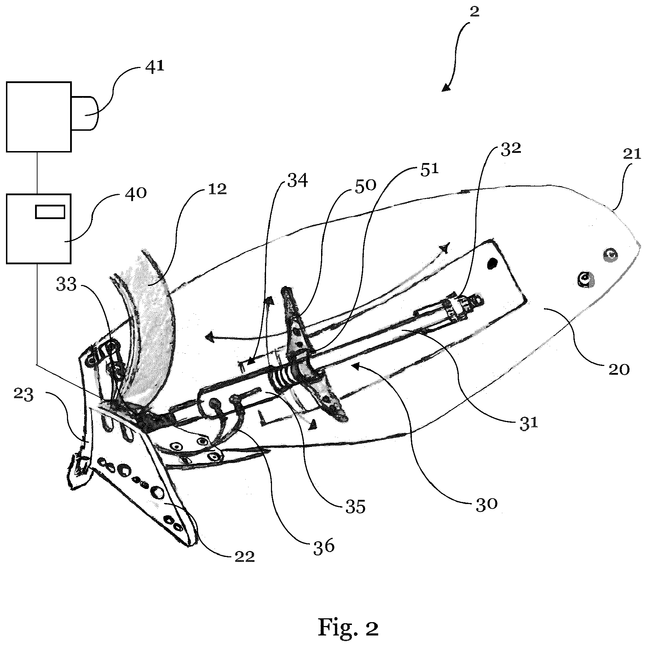

Fig. 2 shows schematically an inventive plough body 2, that can be used in a plough 1 as shown in fig. 1 instead of the plough bodies 11 of the prior art. The plough body 2 comprises a mould board 20 of which the backside is visible in fig. 2 due to the perspective. Further, the plough body 2 comprises a saddle 22, shin 23 and other parts, that are known in the art, so that it is refrained from giving a detailed description thereof. The plough body 2 is fixedly attached to beam 12 and cannot rotate in relation thereto. Reference numeral 30 in general denotes a support strut that reinforces the mould board 20, like the support strut 16 of the prior art. The inventive support strut 30 is attached on the backside of the mould board 20 at a first attachment point 32 and to another part of the plough at a second attachment point 33, namely the beam 12. The support strut 30 comprises an adjustment means 34, that is adapted to allow an increase or decrease in the distance between the two attachment points 32 and 33. To this end, the adjustment means 34 comprises a powered actuating mechanism in form of a hydraulic cylinder 35. As can be taken from the figure, the hydraulic cylinder 35 is arranged in line with the strut 30 and forms basically a part of the strut. On one end of the hydraulic cylinder 35 a strut bar 31 extends, which is connected to the piston of the hydraulic cylinder, so that when the piston (not shown in the figures) is moved back and forth inside the hydraulic cylinder 35, the bar 31, which forms likewise a part of the support strut 30, is moved back and forth relative to the cylinder 35 as well.

When the piston in the hydraulic cylinder 35 is moved to the left in fig. 2, the bar 31 is moved to the left as well and the overall length of the strut 30 decreases. As the bar 31 is fixed at the first attachment point 32 and the other end of the strut 30 is fixed to the second attachment point 33 at the beam 12, a decrease in the length of the strut 30 will bend the mould board 20. Likewise, when the piston of the hydraulic cylinder 35 is moved to the right in fig. 2, the bar 31 is moved to the right as well and the overall length of the support strut 30 increases. Due to the fixed attachment points, this will again lead to a bending of the mould board 20, but this time in the opposite direction, i.e. it will increase the curvature of the mould board 20. Upon actuating of the hydraulic cylinder, it becomes clear, that the distance between the two attachment points 32 and 33 increases or decreases, depending on the direction of movement of the piston inside of the cylinder 35. Due to the arrangement of the attachment points, this leads to a modification of the shape of the mould board. For example, if the piston is moved by 4 cm, the distal end 21 of the mould board will move as well. Preferably, the arrangement is such, that it is possible to achieve a disposition of the distal end 21 of the mould board by at least 1 cm, preferably 2 cm, even more preferably 4 cm and most preferably more than 5 cm.

In the shown embodiment, a guide element in form of a bracket 50 is provided, that extends essentially perpendicular to the strut 30. The bracket 50 comprises a guide aperture 51, through which the strut extends. The aperture 51 is large enough to allow a movement of the bar 31 of strut 30 relative to bracket 50. At the same time, it should be narrow enough, to allow the transmittance of forces from the strut 50 to the bracket and thereby to the mould board 20.

The hydraulic cylinder 35 can be actuated by means of a hydraulic fluid, which runs in hydraulic fluid lines 36.

Highly schematically, a control device 40 is shown, which is connected to sensors 41. The sensors 41 are arranged to detect certain working or environmental conditions, such as soil moisture, ploughing depth, ploughing speed or type of soil. The sensor readings are provided to the control device 40, which in turn may automatically control the adjustment means 34, to actuate hydraulic cylinder 35 to achieve a desired increase or decrease of the distance between the two attachment points and thereby a desired modification of the shape of the mould board 20.

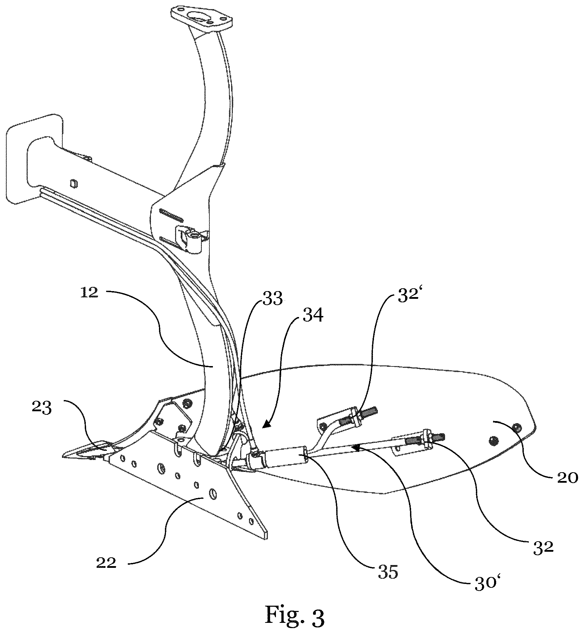

Fig. 3 shows a similar arrangement as Fig. 2, but in the shown embodiment the strut 30' is attached to the backside of the mouldboard 20 by two attachment points: a first attachment point 32 and a third attachment point 32'. The first and third attachment points are offset relative to each other in a direction of the longitudinal extension of the support strut. In other words, the third attachment point 32' is closer to the second attachment point 33 than the first attachment point 32. The use of two, or more, attachment points at the backside of the mouldboard allows an improved control of the modification of the shape of the mouldboard when using the adjustment means. Further, the support provided by the support strut is increased and the stiffness of the mouldboard enhanced.

### Reference table:

- 1: plough
- 2: plough body,
- 11, 11a: prior art plough bodies
- 12: beam
- 13: main frame
- 14: attachment means
- 15: rear wheel
- 16: prior art support strut
- 20: mould board
- 21: distal end
- 22: saddle
- 23: shin
- 30, 30': support strut according to the invention
- 31: bar of support strut according to the invention
- 32: first attachment point
- 32': third attachment point
- 33: second attachment point
- 34: adjustment means
- 35: hydraulic cylinder
- 36: hydraulic fluid lines
- 40: control device
- 41: sensors
- 50: guide bracket
- 51: guide aperture.

## Claims

1. Agricultural machine system comprising a plough (1) with at least one plough body (2), which plough body comprises a mould board (20), which is provided with at least one support strut (30) that is attached on the backside of the mould board (20) at a first attachment point (32) and to another part of the plough (1) at a second attachment point (33), **characterized in that** the support strut (30) comprises an adjustment means (34) that is adapted to increase or decrease the distance between the two attachment points (32, 33) and comprises a powered actuating mechanism (35) to effect the increase or decrease and **in that** the attachment points (32, 33) are arranged, such that increasing or decreasing the distance modifies the shape of the mould board (20).

2. Agricultural machine system according to claim 1, **characterized in that** the support strut (30) is attached on the backside of the mould board (20) at a further, third attachment point (32).

3. Agricultural machine system according to claim 2, **characterized in that** the first and the third attachments points are offset relative to each other in a direction of the longitudinal extension of the support strut (30).

4. Agricultural machine system according to any one of the preceding claims , **characterized in that** the system comprises a control device (40) that adjusts the distance between the attachment point(s) on the backside of the mould board (20) and the second attachment point (33) of the strut (30), which control device (40) comprises control data that matches said distance with one or more of the following conditions: soil moisture, ploughing depth, ploughing speed or type of soil.

5. Agricultural machine system according to any one of the preceding claims, **characterized in that** the system comprises a control device (40) that adjusts the distance between the attachment point(s) on the backside of the mould board (20) and the second attachment point (33) of the strut (30) dynamically, preferably while ploughing.

6. Agricultural machine system according to any one of the preceding claims, **characterized in that** the attachment points (32, 33) are arranged, such that increasing or decreasing the distance modifies the curvature of the mould board (20).

7. Agricultural machine system according to claim 6, **characterized in that** the adjustment means are adapted to dispose the distal end (21) of the mould board (20) upon increasing or decreasing the distance between the attachment points (32, 33) by at least 1 cm, more preferred 2 cm, even more preferred 4 cm and most preferred more than 5 cm.

8. Agricultural machine system according to any one of the preceding claims, **characterized in that** the actuating mechanism (35) comprises a hydraulic cylinder or an electric motor,
wherein preferably the hydraulic cylinder (35) is arranged in line with the strut (30) and forms a part of the strut (30), and is further preferably adapted to increase or decrease the overall length of the strut (30).

9. Agricultural machine system according to any one of the preceding claims, **characterized in that** the mould board (20) is fixed relative to the plough beam (12) and cannot rotate in relation thereto.

10. Agricultural machine system according to any one of the preceding claims, **characterized in that** the strut (30) comprises a guide element (50) that is attached to the backside of the mould board (20) and having a guide aperture (51) through which the strut extends,
wherein preferably the guide element (50) is a bracket that extends essentially perpendicular to the strut (30).

11. Agricultural machine system according to any one of the preceding claims, **characterized in that** the system comprises sensors (41) to detect one or more of the following: soil moisture, ploughing depth, ploughing speed, ploughing force, nutrients, stubble or type of soil, and a control device (40) that adjusts the distance between the attachment point(s) on the backside of the mould board (20) and the second attachment point (33) of the strut (30) dynamically based on the readings of the sensors, preferably automatically.

12. Agricultural machine system according to any one of the preceding claims, **characterized in that** the system comprises means to retrieve information of one or more of the following: soil moisture, ploughing depth, ploughing speed, ploughing force, nutrients, stubble or type of soil, and a control device (40) that adjusts the distance between the attachment point(s) on the backside of the mould board (20) and the second attachment point (33) of the strut (30) dynamically based on the retrieved information, preferably automatically.

13. Agricultural machine system according to any one of the preceding claims, **characterized in that** the plough (1) has at least two plough bodies (2), each provided with an adaptable mould board (20), and a control device (40), whereby the control device (40) is arranged to adapt all adaptable mould boards of the plough individually,
and preferably to adapt all adaptable mould boards of the plough the same, except for the rearmost mould board, wherein the rearmost mould board is adapted such that it matches the tire size of a tractor pulling the plough (1).

14. Agricultural machine system according to one of the preceding claims 11 to 13, **characterized in that** the control device (40) is arranged to adapt the rearmost mould board such that the furrows formed by the rearmost plough body are wider than the furrows formed by the other plough bodies of the plough.

15. Method for dynamically adjusting an agricultural machine system, comprising the steps of:
providing an agricultural machine system according to any one of claims 1 to 14;
adjusting the distance between the attachment points (32, 33) of the strut (30) dynamically in accordance with the ploughing conditions.
